# EUROPEAN PATENT APPLICATION

(11) **EP 4 223 633 A1**
(43) Date of publication of application: **09.08.2023**
(21) Application number: 23167721.2
(22) Date of filing: 29.12.2020
(51) Int. Cl.: B64C 23/06

(54) **WINGLET SYSTEMS FOR AIRCRAFT**

(30) Priority: 30.12.2019 US 201962954752 P
(62) Divisional of application: 20217521.2
(71) Applicant: Bombardier Inc., Dorval QC H4S1Y9 (CA)
(72) Inventor: BOCHUD, Pascal, Quebec, H4N 2J8 (CA); LEBLOND, David, Quebec, H3L 2W7 (CA); PEPIN, François, Beaconsfield, H9W 5J1 (CA)
(74) Representative: HGF

(57) **Abstract**

A winglet system for a wing of an aircraft is provided. The winglet system comprises an attachment end for attachment to a main wing of the aircraft, an upper winglet and a lower winglet. The upper and lower winglets are staggered and also overlap one another along the chord of the attachment end. A spanwise profile of the lower winglet has a midpoint where a slope of the spanwise profile at a point outboard of the midpoint is inclined more upwardly than a slope of the spanwise profile at the midpoint. The configuration of the winglet system may provide benefits such as a reduced bending moment and reduced negative interference between the winglets while also managing ground clearance.

## Description

### CROSS REFERENCE TO RELATED APPLICATION(S) AND CLAIM OF PRIORITY

The present application claims priority to U.S. provisional patent application no. 62/954,752 filed on December 30, 2019, the entire contents of which are hereby incorporated herein by reference.

### TECHNICAL FIELD

The disclosure relates generally to aircraft, and more particularly to winglets of aircraft.

### BACKGROUND

Winglets are wing tip extensions that are known to be beneficial in increasing lift and reducing lift-induced drag on wings of fixed wing aircraft. For example, winglets can improve the long range or high-speed cruise performance of a wing, help increase the range of aircraft, and help improve climb gradient and/or reduce climb thrust. Winglets can also improve the visual appearance of an aircraft.

Since a winglet is usually a lift-generating surface, the winglet can induce a bending moment on the wing to which the winglet is attached. This requires the structure of the wing to be designed to withstand such bending moment. Accordingly, the addition of a winglet on a wing can entail a weight penalty for the winglet itself and also for the heavier wing structure that must be configured to withstand the bending moment induced by the winglet.

### SUMMARY

In one aspect, the disclosure describes a wing for an aircraft. The wing comprises:
a main wing including a main wing tip; and
a winglet system attached to the main wing tip, the winglet system including:
   an upper winglet having an upper winglet tip outboard of the main wing tip;
      and
   a lower winglet having a lower winglet tip outboard of the main wing tip, the upper winglet tip of the upper winglet being disposed higher than the lower winglet tip of the lower winglet relative to the main wing tip;
   wherein:
      the upper and lower winglets are staggered along a chord of the main wing tip;
      the upper and lower winglets overlap one another along the chord of the main wing tip; and
      a spanwise profile of the lower winglet extending along a leading edge of the lower winglet has a midpoint, a slope of the spanwise profile at a point outboard of the midpoint being inclined more upwardly than a slope of the spanwise profile at the midpoint.

The point on the spanwise profile outboard of the midpoint may be closer to the lower winglet tip than to the midpoint.

The point on the spanwise profile outboard of the midpoint may be substantially at the lower winglet tip.

The upper and lower winglets may both extend upwardly relative to the main wing tip.

The upper winglet may extend upwardly relative to the main wing tip and the lower winglet may extend downwardly relative to the main wing tip.

The spanwise profile of the lower winglet may have a lower winglet inflection. The lower winglet inflection may be disposed between a proximal portion of the spanwise profile of the lower winglet proximal to the main wing tip and distal portion of the spanwise profile distal of the main wing tip. The proximal portion of the spanwise profile may be shorter than the distal portion of the spanwise profile.

In some embodiments, at least a majority of the distal portion of the spanwise profile may be concave relative to a space between the upper and lower winglets viewed along the chord of the main wing tip.

In some embodiments, at least a majority of the distal portion of the spanwise profile may be curved when viewed along the chord of the main wing tip.

The lower winglet tip may be oriented upwardly.

A junction angle between the upper and lower winglets viewed along the chord of the main wing tip may be between 60 degrees and 90 degrees.

A junction angle between the upper and lower winglets viewed along the chord of the main wing tip may be greater than 45 degrees and up to 150 degrees.

A root chord length of the lower winglet may be between 55% and 80% of a length of the chord of the main wing tip.

A root chord length of the upper winglet may be between 55% and 80% of the length of the chord of the main wing tip.

An amount of overlap of root chords of the upper and lower winglets may be between 10% and 60% of the length of the chord of the main wing tip.

The leading edge of the lower winglet may be disposed forward of a leading edge of the upper winglet relative to the chord of the main wing tip.

A leading edge of the upper winglet may be disposed forward of the leading edge of the lower winglet relative to the chord of the main wing tip.

An overlap between the upper and lower winglets may extend from a junction of the upper and lower winglets to the lower winglet tip.

A spanwise profile of the upper winglet extending along the leading edge of the upper winglet may be tangent-discontinuous with a leading edge of the main wing when viewed along the chord of the main wing tip.

The spanwise profile of the upper winglet may have a first upper winglet inflection. The spanwise profile of the upper winglet may have a second upper winglet inflection.

The lower winglet may be aft-swept relative to the chord of the main wing tip. The upper winglet may be aft-swept relative to the chord of the main wing tip.

The upper winglet tip may be disposed outboard of the lower winglet tip.

Embodiments may include combinations of the above features.

In another aspect, the disclosure describes a winglet system for a wing of an aircraft. The winglet system comprises:
an attachment end for attachment to a main wing of the aircraft, the attachment end defining an airfoil section having a chord;
an upper winglet; and
a lower winglet, wherein, in an in-use orientation of the winglet system:
   the upper winglet has an upper winglet tip outboard of the attachment end;
   the lower winglet has a lower winglet tip outboard of the attachment end;
   the upper winglet tip of the upper winglet is disposed higher than the lower winglet tip of the lower winglet relative to the attachment end;
   the upper and lower winglets are staggered along the chord of the attachment end;
   the upper and lower winglets overlap one another along the chord of the attachment end; and
   a spanwise profile of the lower winglet extending along a leading edge of the lower winglet has a midpoint, a slope of the spanwise profile at a point outboard of the midpoint being inclined more upwardly than a slope of the spanwise profile at the midpoint.

The upper and lower winglets may both extend upwardly relative to the attachment end.

The upper winglet may extend upwardly relative to the attachment end and the lower winglet may extend downwardly relative to the attachment end.

Embodiments may include combinations of the above features.

In a further aspect, the disclosure describes an aircraft comprising:
a fuselage;
one or more engines for propelling the aircraft, the one or more engines mounted to the fuselage; and
a first wing and a second wing disposed on opposite sides of the fuselage, the first and second wings each including:
   a main wing including a main wing tip; and
   a winglet system attached to the main wing tip, the winglet system including:
      an upper winglet having an upper winglet tip outboard of the main wing tip; and
      a lower winglet having a lower winglet tip outboard of the main wing tip;
      wherein:
         the upper winglet tip of the upper winglet is disposed higher than the lower winglet tip of the lower winglet relative to the main wing tip;
         the upper and lower winglets are staggered along a chord of the main wing tip;
         the upper and lower winglets overlap one another along the chord of the main wing tip; and
         a spanwise profile of the lower winglet extending along a leading edge of the lower winglet has a midpoint, a slope of the spanwise profile at a point outboard of the midpoint being inclined more upwardly than a slope of the spanwise profile at the midpoint.

The upper and lower winglets may both extend upwardly relative to the main wing tip.

The upper winglet may extend upwardly relative to the attachment end and the lower winglet may extend downwardly relative to the main wing tip.

The aircraft may be devoid of any engines for propelling the aircraft mounted to the first and second wings.

Embodiments may include combinations of the above features.

In a further aspect, the disclosure describes an aircraft comprising a winglet system as described herein.

Further details of these and other aspects of the subject matter of this application will be apparent from the detailed description included below and the drawings.

### DESCRIPTION OF THE DRAWINGS

Reference is now made to the accompanying drawings, in which:
FIGS. 1 and 2 are perspective views of an exemplary aircraft including winglet systems as described herein;
FIG. 3 is a front view of the aircraft of FIG. 1 on the ground;
FIGS. 4 and 5 are enlarged perspective views of an exemplary port side winglet system of the aircraft of FIG. 1;
FIG. 6 is a side view of the winglet system of FIG. 4;
FIG. 7 is a front view of the winglet system of FIG. 4;
FIG. 8 is a rear view of the winglet system of FIG. 4;
FIG. 9 is a top view of the winglet system of FIG. 4;
FIG. 10 is a bottom view of the winglet system of FIG. 4;
FIG. 11 is an enlarged perspective view of another exemplary port side winglet system for the aircraft of FIG. 1;
FIG. 12 is a top view of the winglet system of FIG. 11;
FIG. 13 is a front view of the winglet system of FIG. 11;
FIG. 14 is an enlarged perspective view of another exemplary port side winglet system for the aircraft of FIG. 1;
FIG. 15 is a top view of the winglet system of FIG. 14;
FIG. 16 is a front view of the winglet system of FIG. 14;
FIG. 17 is a front view of the winglet systems of FIGS. 4, 11 and 14 in a superimposed arrangement;
FIG. 18 is an enlarged perspective view of another exemplary port side winglet system for the aircraft of FIG. 1;
FIG. 19 is a top view of the winglet system of FIG. 18;
FIG. 20 is a front view of the winglet system of FIG. 18;
FIG. 21 is an enlarged perspective view of another exemplary port side winglet system for the aircraft of FIG. 1;
FIG. 22 is a top view of the winglet system of FIG. 21; and
FIG. 23 is a front view of the winglet system of FIG. 21.

### DETAILED DESCRIPTION

The winglet systems described herein include an upper winglet and a lower winglet intended to be attached to a same main wing tip of an aircraft wing. In some embodiments, the dual-winglet system described herein can induce a reduced bending moment on the main wing tip compared to a single larger winglet that provides a similar performance benefit.

In some embodiments, a spanwise profile of the lower winglet may be configured to permit the lower winglet to have sufficient span without overly sacrificing wing tip ground clearance. The configuration of the lower winglet can provide added ground clearance thereby reducing the risk of the lower winglet striking the ground when the aircraft is operated near or on the ground such as during takeoff and landing for example. The configuration of the lower winglet may be particularly advantageous for business jets having fuselage-mounted engines and relatively low wings. However, it is understood that the winglet systems described herein may also be used on other types of aircraft including those having wing-mounted engines.

The term "substantially" as used herein may be applied to modify any quantitative representation which could permissibly vary without resulting in a change in the basic function to which it is related.

Aspects of various embodiments are described through reference to the drawings.

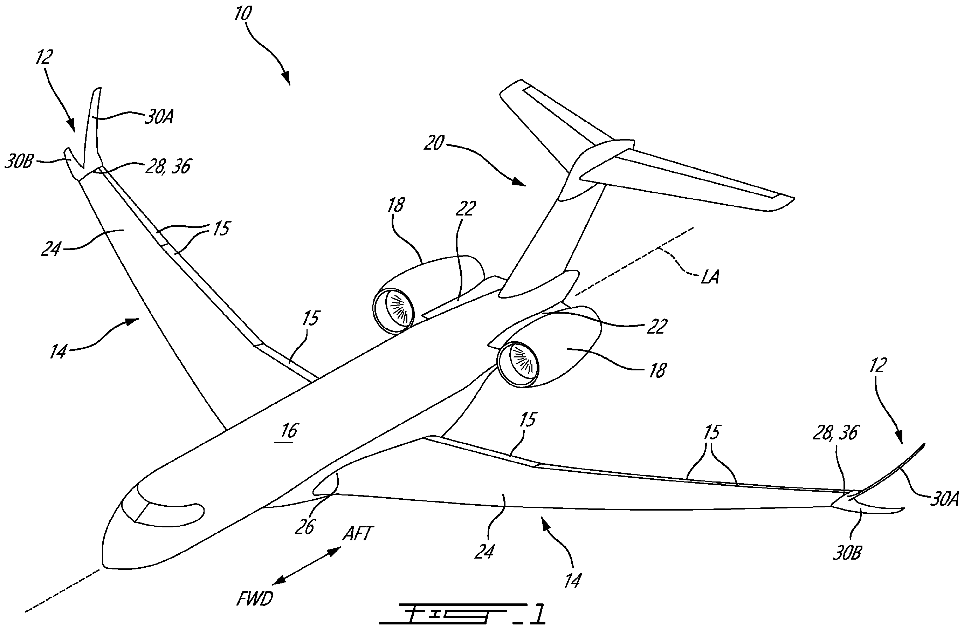

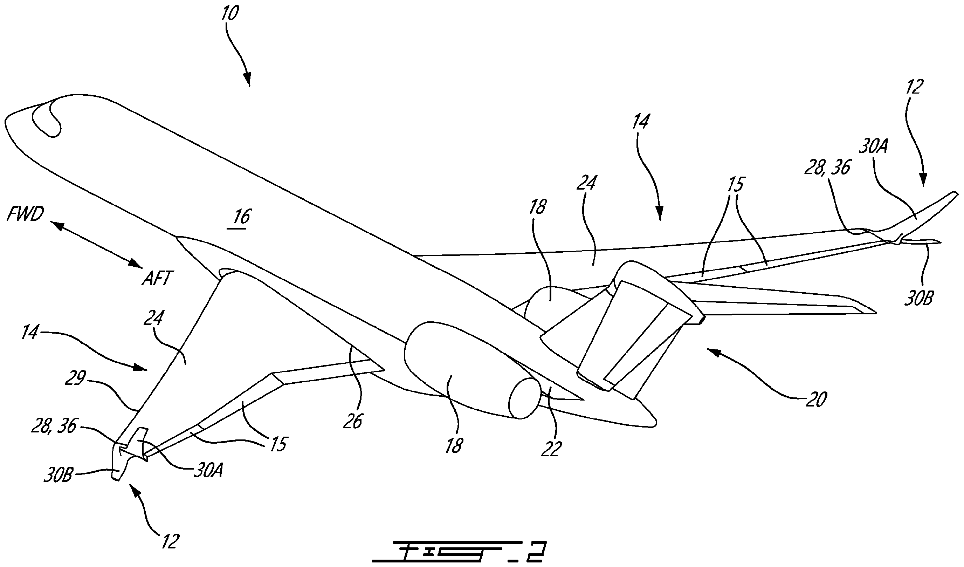

FIGS. 1 and 2 are perspective views of an exemplary aircraft 10 including two winglet systems 12 as described herein. Aircraft 10 may be any type of manned or unmanned aircraft (e.g., drones) such as corporate, private, commercial and passenger aircraft. For example, aircraft 10 may be a (e.g., ultra-long range) business jet, a narrow-body twin-engine jet airliner or a turboprop aircraft. Aircraft 10 may be a fixed-wing aircraft. Winglet system 12 may be used on different types of aircraft but may offer appreciable benefits to long-range fixed-wing aircraft travelling relatively close to the speed of sound (e.g., Mach 0.8 - 0.95) and that have fuselage-mounted engines instead of wing-mounted engines.

Aircraft 10 may include two opposite wings 14 extending on opposite sides of fuselage 16. Wings 14 may each include one or more movable flight control surfaces 15. Aircraft 10 may include one or more engines 18 for propelling aircraft 10, and empennage 20. Engine(s) 18 may be mounted to an aft portion of fuselage 16 via respective pylons 22. In some embodiments, aircraft 10 may be devoid of any engines mounted to wings 14. Alternatively, aircraft 10 may have one or more engines mounted to (e.g., an under side of) wings 14. Fuselage 16 may have a longitudinal axis LA that may substantially correspond to a roll axis of aircraft 10. Forward (FWD) and aft (AFT) directions are labelled in FIGS. 1 and 2, and generally refer to opposite directions along longitudinal axis LA of fuselage 16.

Wings 14 each include main wing 24 and winglet system 12. Main wing 24 may include an inboard main wing root 26 for mounting to fuselage 16 via a suitable wing box for example, and opposite outboard main wing tip 28. Main wing 24 may have leading edge 29. Winglet system 12 is attached to main wing tip 28. Winglet system 12 includes upper winglet 30A extending upwardly relative to main wing tip 28, and lower winglet 30B extending downwardly relative to main wing tip 28.

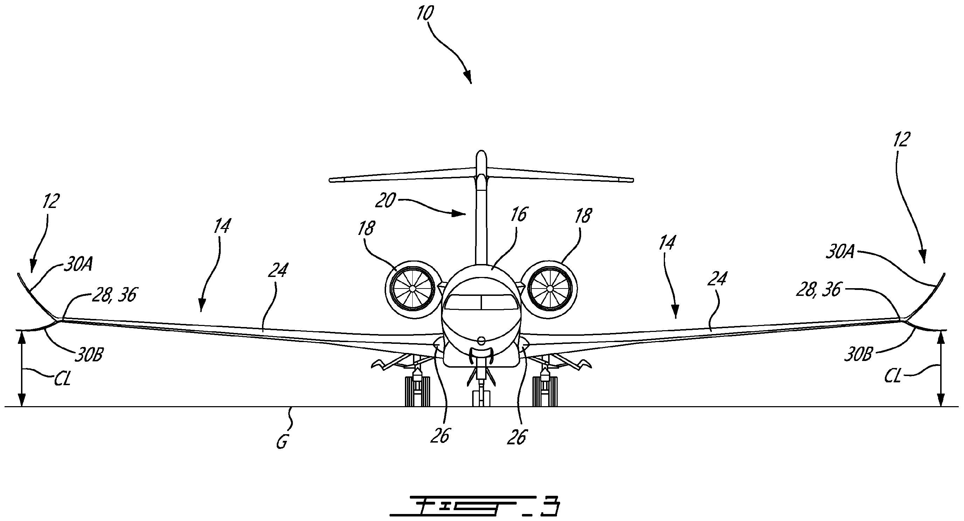

FIG. 3 is a front view of aircraft 10 when resting on the ground G. FIG. 3 indicates a ground clearance CL between opposite lower winglets 30B and ground G. On aircraft that have fuselage-mounted engines 18 and/or are devoid of any engines mounted under wings 14, wings 14 may be disposed relatively low to ground G. Accordingly, for such aircraft configurations, winglet system 12 may, as explained below, be configured to avoid overly sacrificing ground clearance CL to avoid overly increasing the risk of wing tip strike when aircraft 10 is operated near or on the ground G.

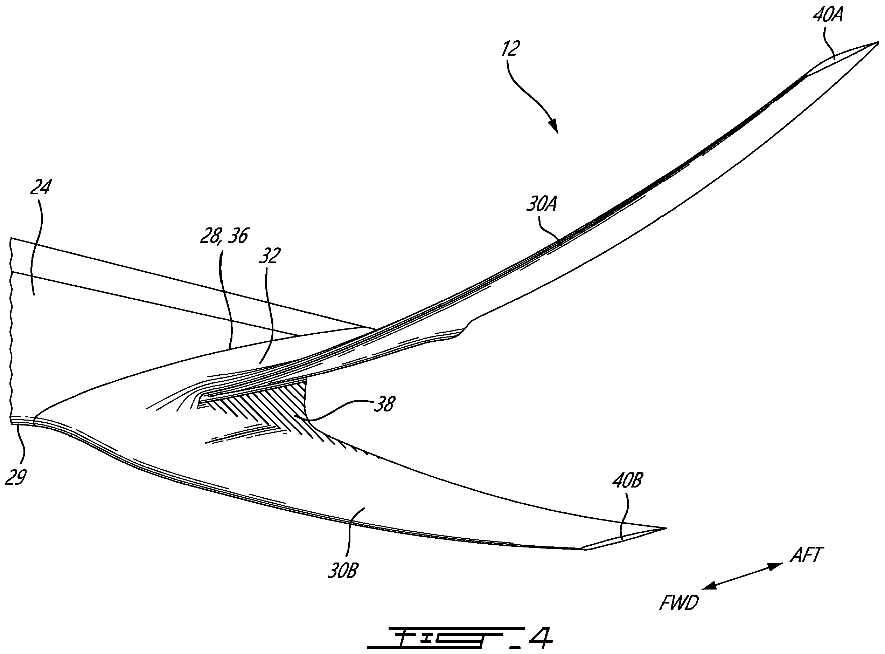

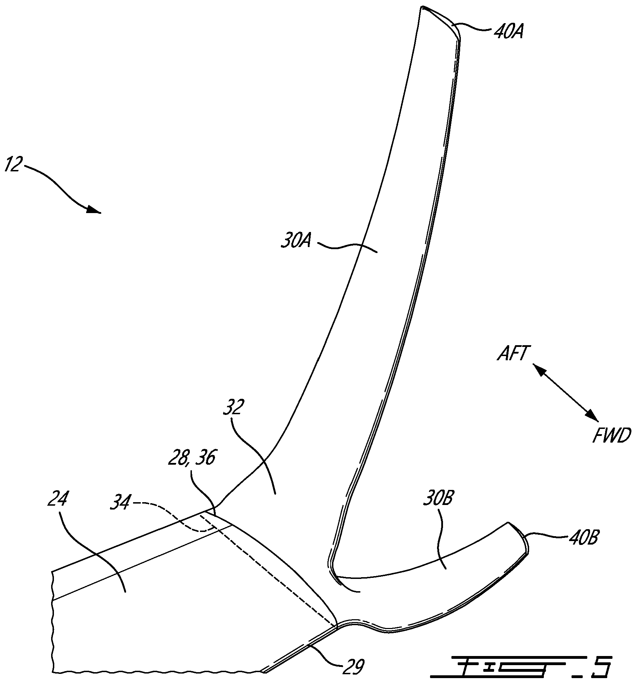

FIGS. 4 and 5 are enlarged perspective views of a port side winglet system 12 of aircraft 10. A starboard side winglet system 12 may be a mirror image of the port side winglet 12. Winglet system 12 may include an optional blended portion 32 that provides relatively smooth and curved transitions between main wing tip 28 and the respective upper winglet 30A and lower winglet 30B. Blended portion 32 may be configured to provide desirable flow conditions near main wing tip 28. Upper winglet 30A and lower winglet 30B may each extend directly from main wing tip 28 via blended portion 32 as opposed to having one (e.g., smaller) winglet extending from another (e.g., larger) winglet.

Main wing 24 may be a lift-generating surface and main wing tip 28 may have an airfoil-shaped cross-section having chord 34 shown in FIG. 5. Attachment end 36 of winglet system 12 may be shaped to substantially match the shape of main wing tip 28. For example, attachment end 36 may have a similar or substantially identical airfoil-shaped cross-section as that of main wing tip 28. Accordingly, chord 34 may be shared between main wing tip 28 and attachment end 36 of winglet system 12.

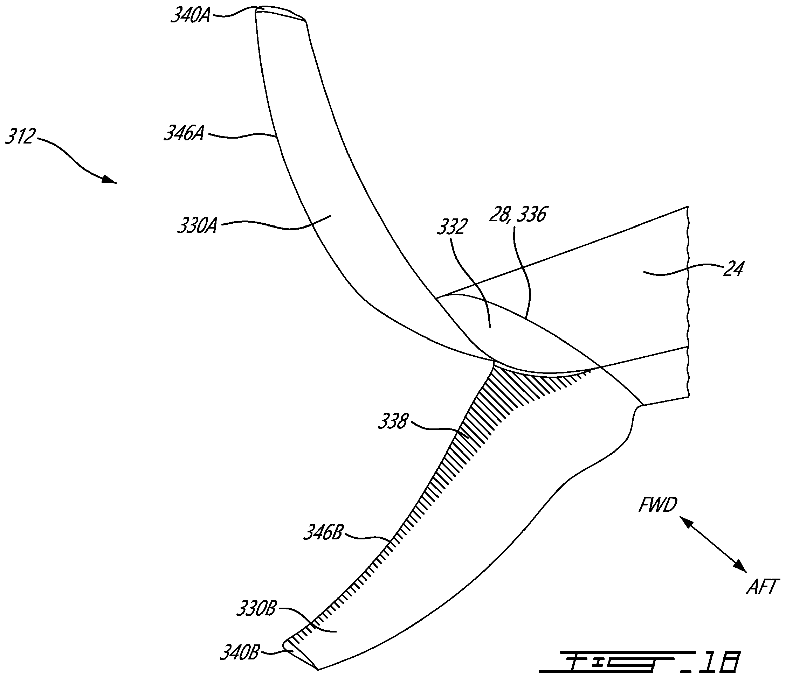

Upper winglet 30A and lower winglet 30B may be staggered along chord 34 of main wing tip 28 so that lower winglet 30B is disposed forward of upper winglet 30A. However, it is understood that, as explained below in relation to FIGS. 18-20, lower winglet 30B could instead be disposed aft of upper winglet 30A. The staggered configuration of upper winglet 30A and lower winglet 30B may be advantageous in some embodiments by reducing a negative interference between upper winglet 30A and lower winglet 30B. Depending on the specific geometry of winglet system 12, the staggered configuration may, for example, reduce an amount of influence that a flow of air on an upper side of lower winglet 30B may have on a flow of air on a lower side of upper winglet 30A. Specifically, negative interference could be caused by flow acceleration over the upper surface of lower winglet 30B unloading upper winglet 30A, which can result in an increase in drag.

It is understood that components of winglet system 12 may have some flexibility and may deflect during use. Other than such deflection, winglet system 12 may have a substantially fixed geometric configuration where the positions of upper winglet 30A and lower winglet 30B may not be selectively adjusted.

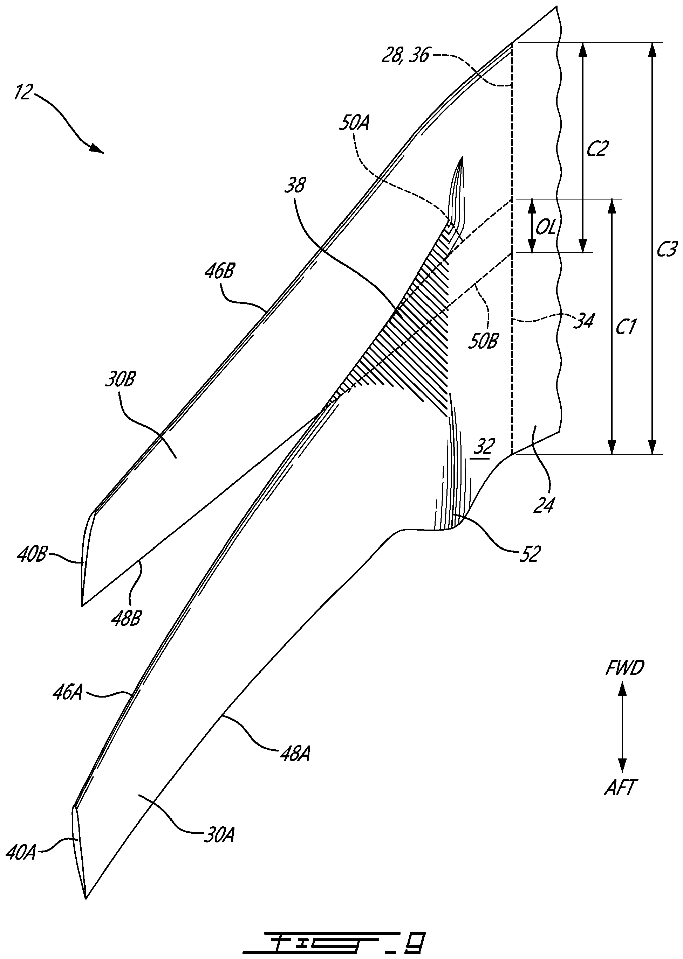

As further explained below in relation to FIG. 9, upper winglet 30A and lower winglet 30B may overlap one another along chord 34. FIG. 4 illustrates overlap region 38 overlaying lower winglet 30B. Overlap region 38 may be represented a shadow cast onto lower winglet 30B by upper winglet 30A as a result of a light source being disposed vertically above winglet system 12 and oriented downwardly.

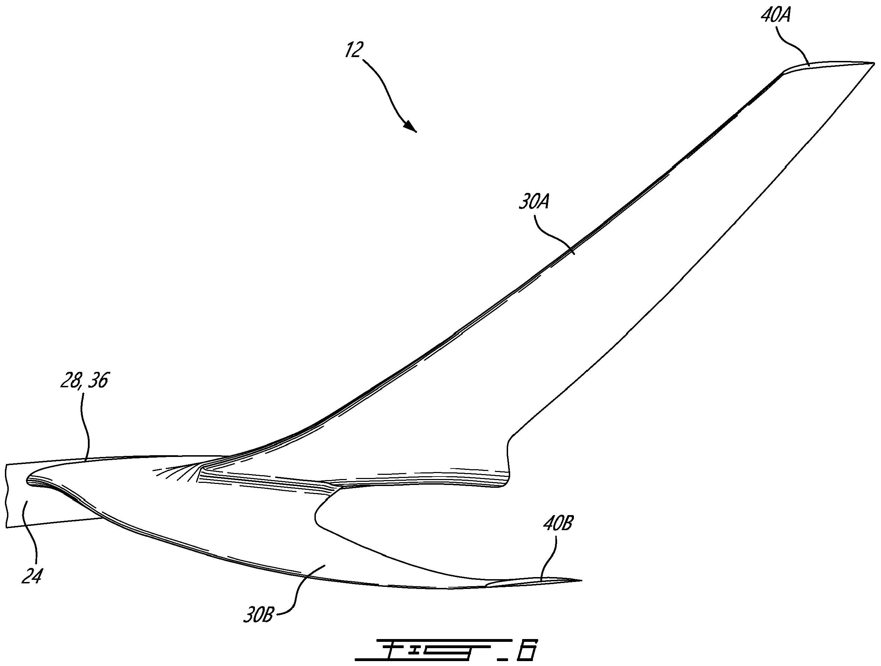

FIG. 6 is a side view of winglet system 12. FIG. 6 shows winglet tips 40A and 40B of upper winglet 30A and lower winglet 30B respectively. One or both of upper winglet 30A and lower winglet 30B may be lift-generating surfaces and may have cross-sections that are airfoil-shaped and asymmetric about their chords. Accordingly, one or both upper winglet 30A and lower winglet 30B may have respective suction (e.g., upper) sides and pressure (e.g., lower) sides.

Winglet system 12 may be made from materials similar or identical to those of main wing 24 using known or other manufacturing methods. In various embodiments, an outer skin of winglet system 12 may be made of a (e.g., aluminum-based) metallic material or a fibre-reinforced composite material such as carbon fibre reinforced polymer for example. Winglet system 12 may include an internal framework supporting the outer skin and structurally connecting winglet system 12 to main wing 24.

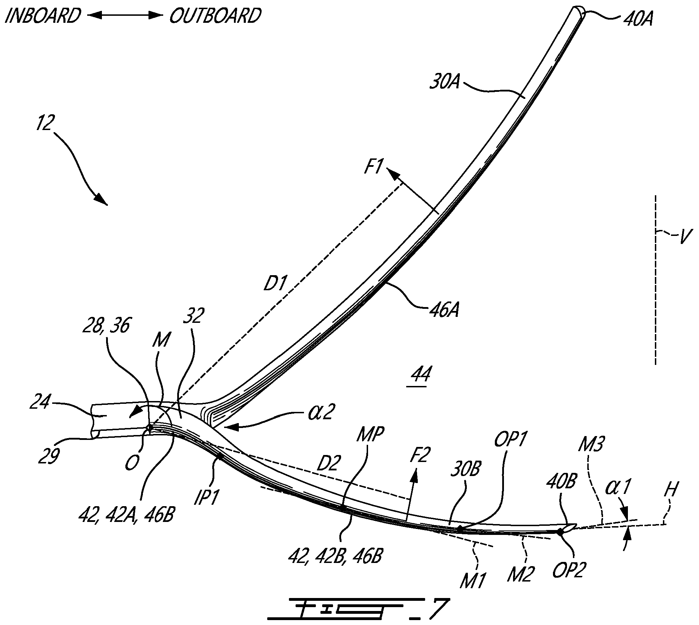

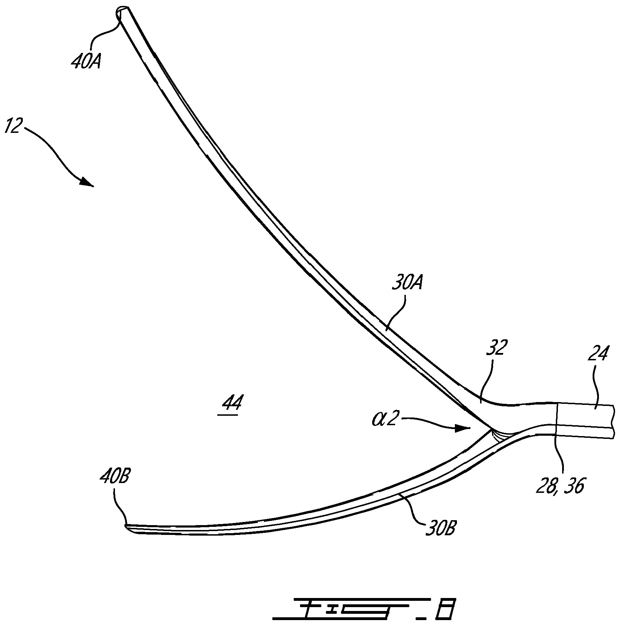

FIGS. 7 and 8 are respective front and rear views of winglet system 12. The vantage point in FIG. 7 is substantially along a chordwise direction of main wing tip 28 (i.e., along chord 34 shown in FIG. 5).

Even though lower winglet 30A may extend below main wing tip 28, the amount of downward extension of downward wingtip 30B may be managed using an inflection in lower winglet 30B for wing tip strike considerations. Inflection point IP1 is illustrated in FIG. 7 along a continuous spanwise profile 42 of lower winglet 30B extending along leading edge 46B of lower winglet 30B. Inflection point IP1 may correspond to a location along spanwise profile 42 where spanwise profile 42 changes from being convex to being concave. Inflection point IP1 may be disposed between proximal portion 42A of spanwise profile 42 proximal to main wing tip 28 and distal portion 42B of spanwise profile 42 distal of main wing tip 28. At least part of proximal portion 42A of spanwise profile 42 may be convex relative to space 44 between upper winglet 30A and lower winglet 30B. In some embodiments, at least a majority of proximal portion 42A of spanwise profile 42 may be convex relative to space 44. In some embodiments, substantially an entirety of proximal portion 42A of spanwise profile 42 may be convex relative to space 44. Conversely, at least part of distal portion 42B of spanwise profile 42 may be concave relative to space 44 between upper winglet 30A and lower winglet 30B. In some embodiments, at least a majority of distal portion 42B of spanwise profile 42 may be concave relative to space 44. In some embodiments, substantially an entirety of distal portion 42B of spanwise profile 42 may be concave relative to space 44.

In some embodiments, at least a majority of proximal portion 42A of spanwise profile 42 may be curved when viewed along chord 34 of main wing tip 28 as shown in FIG. 7. In some embodiments, proximal portion 42A of spanwise profile 42 may be substantially entirely curved when viewed along chord 34 of main wing tip 28. In some embodiments, at least a majority of distal portion 42B of spanwise profile 42 may be curved when viewed along chord 34 of main wing tip 28 as shown in FIG. 7. In some embodiments, distal portion 42B of spanwise profile 42 may be substantially entirely curved when viewed along chord 34 of main wing tip 28.

Inflection point IP1 may be disposed closer to main wing tip 28 than to tip 40B of lower winglet 30B. Accordingly, a curve length of proximal portion 42A of spanwise profile 42 may be shorter than a curve length of distal portion 42B of spanwise profile 42. In some embodiments, distal portion 42B of spanwise profile 42 may be two or more times longer than proximal portion 42A of spanwise profile 42. In some embodiments, distal portion 42B of spanwise profile 42 may be three or more times longer than proximal portion 42A of spanwise profile 42. In some embodiments, distal portion 42B of spanwise profile 42 may be four or more times longer than proximal portion 42A of spanwise profile 42. In some embodiments, distal portion 42B of spanwise profile 42 may be between two and five times longer than proximal portion 42A of spanwise profile 42.

Spanwise profile 42 may be tangent-continuous with leading edge 29 of main wing 24 when viewed along chord 34 (see FIG. 5) of main wing tip 28. A spanwise profile of upper winglet 30A extending along leading edge 46A of upper winglet 30A and extrapolated toward main wing tip 28 may be tangent-continuous with leading edge 29 of main wing 24 when viewed along chord 34 of main wing tip 28.

FIG. 7 shows horizontal axis H that may be parallel to ground G shown in FIG. 3. Relative to horizontal axis H, tip 40B of lower winglet 30B may be oriented upwardly in some embodiments. As used herein, the terms "upwardly" and "downwardly" are intended to encompass "partially upwardly" and "partially downwardly" respectively and are not intended to be limited to directions that are purely vertical. Accordingly, angle α1 shown in FIG. 7 may be positive. In some embodiments, angle α1 may be about 10 degrees. However, it is understood that angle α1 could be negative in some embodiments. In some embodiments, angle α1 may be between +10 and -10 degrees from horizontal axis H. In some embodiments, angle α1 may be between +20 and -20 degrees from horizontal axis H. In some embodiments, angle α1 may be about zero.

FIG. 7 also shows vertical axis V that may be perpendicular to horizontal axis H. Relative to vertical axis V, tip 40A of upper winglet 30A may be disposed higher than tip 40B of lower winglet 30B. In some embodiments, tip 40A of upper winglet 30A may be disposed outboard or inboard of tip 40B of lower winglet 30B. In some embodiments, tip 40A of upper winglet 30A may be substantially vertically aligned with tip 40B of lower winglet 30B.

The configuration of winglet system 12 may allow for a relatively large junction angle α2 between upper winglet 30A and lower winglet 30B when viewed along chord 34 of main wing tip 28 as shown in FIG. 7. Upper winglet 30A and lower winglet 30B may extend away from attachment end 36 in a divergent manner. Main wing 24 may define a wing plane passing through chord 34 and one or more chords of main wing 24 that are disposed inboard of chord 34. Upper winglet 30A may extend upwardly from the wing plane and lower winglet 30B may extend downwardly from the wing plane.

The relatively large junction angle α2 combined with the staggering of upper winglet 30A and lower winglet 30B may reduce the potential for negative interference, which can be a source of drag, between upper winglet 30A and lower wing let 30B by reducing an amount of influence that a flow of air on an upper side of lower winglet 30B may have on a flow of air on a lower side of upper winglet 30A. In some embodiments, junction angle α2 may be between 60 degrees and 90 degrees. In some embodiments, junction angle α2 may be greater than 45 degrees and up to 120 degrees.

The inflection provided in lower winglet 30B also allows for a relatively large junction angle α2 while managing tip strike potential by reducing the amount of downward extension of lower winglet 30B toward ground G (shown in FIG. 3). The concave curvature of distal portion 42B of spanwise profile 42 may allow for a longer lower winglet 30B and a larger junction angle α2 while limiting the downward extension of lower winglet 30B (e.g., see ground clearance CL in FIG. 3). As a comparison, having a lower winglet with an entirely linear spanwise profile 42 having a similar span and ground clearance would result in a smaller junction angle α2.

Compared to a single larger winglet providing a similar performance benefit, the dual-winglet configuration of winglet system 12 may induce a lower bending moment in main wing 24. In some cases, a larger winglet will produce a larger drag reduction. However, drawbacks associated with increasing the size of a winglet include the loading and bending moment increase on the main wing, from root to tip, which means a heavier wing structure. Such weight increase can cancel a portion of the benefit provided by the single larger winglet. In the example shown in FIG. 7, a moment M induced during flight due to the lift generated by upper winglet 30A and lower winglet 30B about reference point O may be represented as M = F1*D1 + F2*D2 where F1 is a resultant lift force generated by upper winglet 30A, D1 is a distance between where force F1 is applied and reference point O, F2 is a resultant lift force generated by lower winglet 30B, and D2 is a distance between where force F2 is applied and reference point O. Compared to a single larger winglet providing a similar performance benefit, it is believed that, in some situations, dual-winglet system 12 would induce a lower overall moment M than the single larger winglet. Specifically, the single larger force applied at a larger distance for the single larger winglet would provide a larger moment M than two smaller forces F1 and F2 respectively applied at two shorter distances D1 and D2. In other words, for a given moment M induced by the single larger winglet, the dual-winglet system 12 may provide a greater performance benefit for the same moment M.

Referring to FIG. 7, spanwise profile 42 may have midpoint MP disposed at or near a middle of spanwise profile 42. Midpoint MP may be disposed halfway along spanwise profile 42 between attachment end 36 and tip 40B of lower winglet 30B. For example, midpoint MP may be disposed between inboard and outboard portions of spanwise profile 42 of substantially equal curve lengths. Spanwise profile 42 may have slope M1 at midpoint MP. In various embodiments, slope M1 may be negative (i.e., downwardly inclined), zero, or positive (i.e., upwardly inclined) relative to vertical axis V.

Spanwise profile 42 may have slope M2 at outboard point OP1 disposed outboard of midpoint MP. Slope M2 at outboard point OP1 may be greater than slope M1 at midpoint MP. In other words, slope M2 may be inclined more upwardly than slope M1. In various embodiments, slope M2 may be negative (i.e., downwardly inclined), zero, or positive (i.e., upwardly inclined) relative to vertical axis V. Outboard point OP1 may be disposed closer to tip 40B of lower winglet 30B than to midpoint MP along spanwise profile 42.

Spanwise profile 42 may have slope M3 at outboard point OP2 disposed outboard of midpoint MP. Slope M3 at outboard point OP2 may be greater than slope M1 at midpoint MP. Slope M3 at outboard point OP2 may also be greater than slope M2 at outboard point OP1. In other words, slope M3 may be inclined more upwardly than slopes M1 and M2. In various embodiments, slope M3 may be negative (i.e., downwardly inclined), zero, or positive (i.e., upwardly inclined) relative to vertical axis V. Outboard point OP2 may be disposed substantially at tip 40B of lower winglet 30B. Outboard point OP2 may be disposed at an outboard end of spanwise profile 42. The more upward orientation of the outboard portion (e.g., including tip 40B) of lower winglet 30B relative to a middle portion or an inboard portion of lower winglet 30B may promote a greater ground clearance.

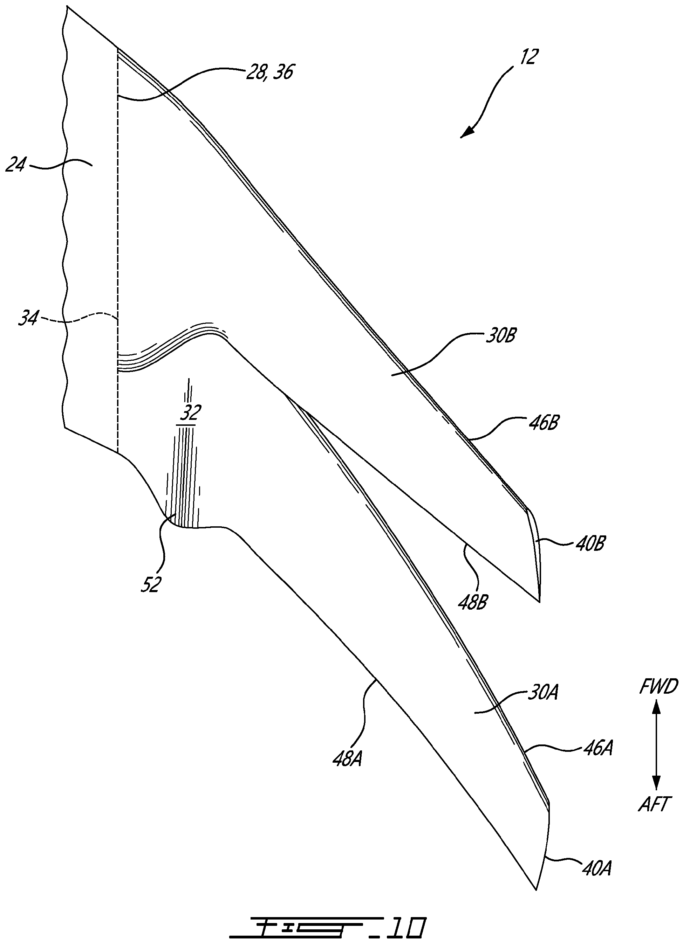

FIGS. 9 and 10 are respective top and bottom views of winglet system 12. In various embodiments, upper winglet 30A and lower winglet 30B may be similar in size in terms of wetted area (i.e., the surface area that interacts with the ambient air), root chord length and span. In some embodiments, a wetted area of upper winglet 30A may be substantially equal to a wetted area of lower winglet 30B. In some embodiments, the wetted area of lower winglet 30B may be between 50% and 120% of the wetted area of upper winglet 30B. The similar size of upper winglet 30A and lower winglet 30B may provide a relatively even load distribution (i.e., good loading balance) between upper winglet 30A and lower winglet 30B. In some embodiments, lower winglet 30B may have a smaller wetted area than upper winglet 30A. In some embodiments, lower winglet 30B may have a larger wetted area than upper winglet 30A.

Root chord length C1 of upper winglet 30A and root chord length C2 of lower winglet 30B may be expressed as a percentage of wing tip chord length C3. In reference to FIG. 9, root chord length C1 may be shown by extending (e.g., extrapolating) leading edge 46A of upper winglet 30A to main wing tip 28 so that root chord length C1 may extend from the trailing edge of main wing tip 28 to the intersection of extension line 50A with chord 34 of main wing tip 28. Similarly, root chord length C2 may be shown by extending (e.g., extrapolating) trailing edge 48B of lower winglet 30B to main wing tip 28 so that root chord length C2 may extend from leading edge 29 of main wing tip 28 to the intersection of extension line 50B with chord 34 of main wing tip 28. Root chords of upper winglet 30A and of lower winglet 30B as defined in above may be coaxial with chord 34 of main wing tip 28.

From an aerodynamics point of view, decreasing the winglet root chord can be counter-balanced by increasing winglet incidence such that the net winglet lift is constant. This usually provides drag reduction as the winglet wetted area is reduced and friction drag is consequently also reduced. From a structural point of view however, there is a limit to this trade-off because the winglet becomes so thin that there is not enough internal space left for an efficient structural layout. In various embodiments, root chord lengths C1 and C2 each may be greater than 50% but less than 100% of chord length C3 of chord 34 of main wing tip 28 so that overlap region 38 may be provided. In some embodiments, root chord length C1 may be between 55% and 80% of chord length C3. In some embodiments, root chord length C2 may be between 55% and 80% of chord length C3.

In various embodiments, overlapping amount OL between root chord length C1 and root chord length C2 may be between 10% and 60% of chord length C3 of chord 34 of main wing tip 28. In some embodiments, the staggered arrangement of upper winglet 30A and lower winglet 30B combined with a relatively small overlapping amount OL may reduce the risk of negative interference between the lower winglet 30B and upper winglet 30A at and near the junction between lower winglet 30B and upper winglet 30A as explained above.

The staggered arrangement of upper winglet 30A and lower winglet 30B may result in leading edge 46B of lower winglet 30B being disposed forward of leading edge 46A of upper winglet 30A relative to chord 34 of main wing tip 28. Similarly, the staggered arrangement of upper winglet 30A and lower winglet 30B may result in trailing edge 48B of lower winglet 30B being disposed forward of trailing edge 48A of upper winglet 30A relative to chord 34 of main wing tip 28.

In some embodiments, leading edge 46B and/or trailing edge 48B of lower winglet 30B outboard of blended portion 32 may be curved or linear in a top or bottom view such as in FIGS. 9 and 10. Accordingly, leading edge 46B of lower winglet 30B may not be continuously curved with leading edge 29 of main wing tip 28 in the top view. Similarly, in some embodiments, leading edge 46A and/or trailing edge 48A of upper winglet 30B outboard of blended portion 32 may be curved or linear in a top or bottom view such as in FIGS. 9 and 10. Accordingly, trailing edge 48A of upper winglet 30A may not be continuously curved with the trailing edge of main wing tip 28 in the top view.

As shown in FIGS. 9 and 10, lower winglet 30B may be aft-swept. Upper winglet 30A may also be aft-swept. In some embodiments, the transition between upward portion 30A and attachment end 36 of winglet system 12 may define rounded tab 52 as an appendage extending in the aft direction beyond trailing edge 48A of upper winglet 30A.

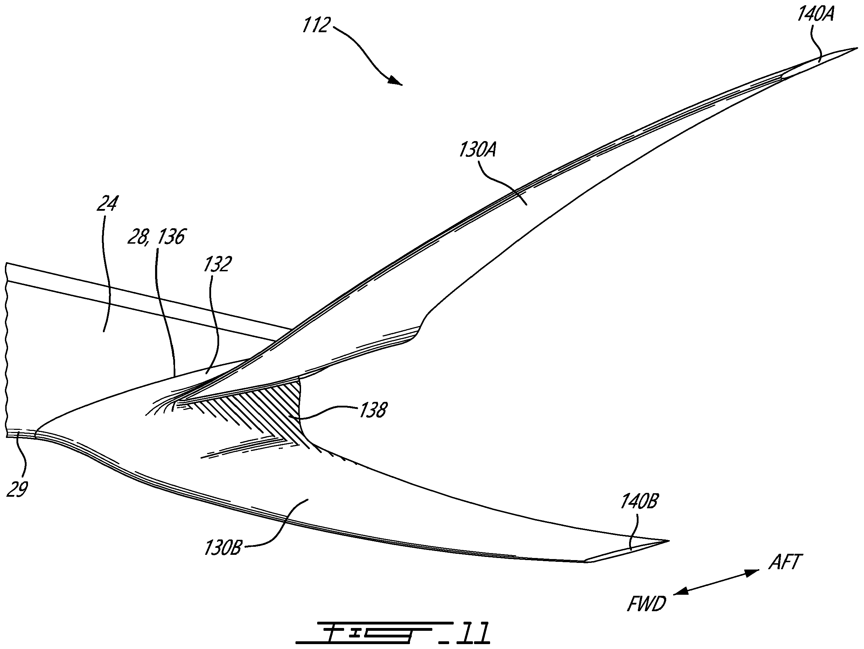

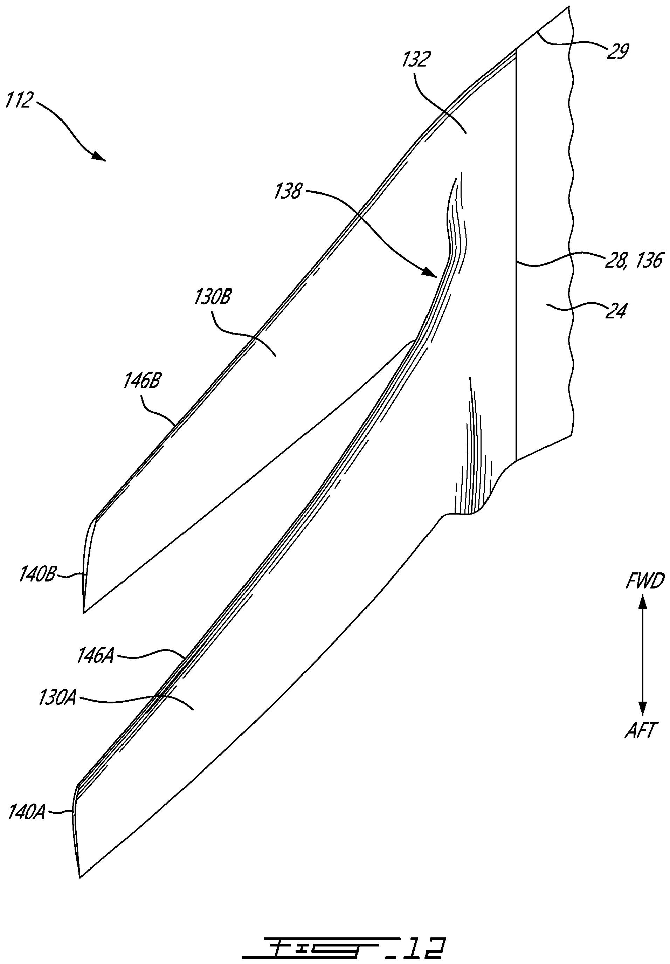

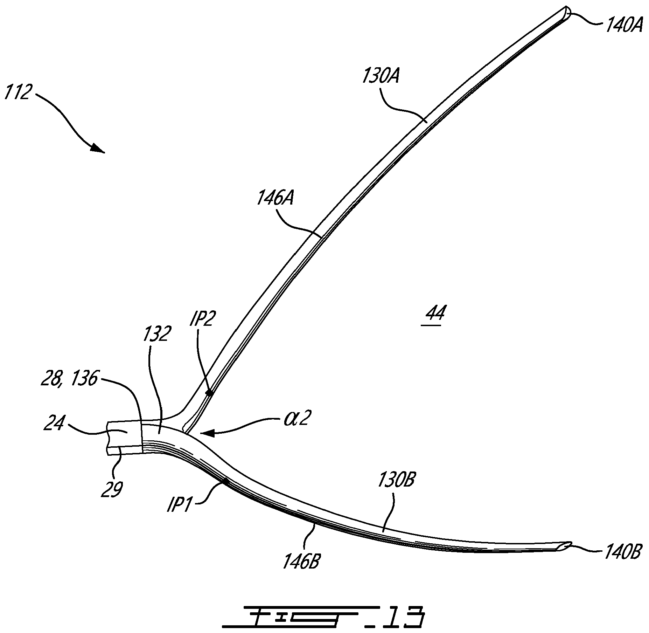

FIGS. 11-13 illustrate another exemplary port side winglet system 112 that may be suitable for aircraft 10. FIG. 11 is an enlarged perspective view of winglet system 112. FIGS. 12 and 13 are top and front views respectively of winglet system 112. The description of elements of winglet system 112 corresponding to elements of winglet system 12 described above is not repeated. Elements of winglet system 112 corresponding to elements of winglet system 12 are identified using reference numerals that have been incremented by 100. Winglet system 112 may include upper winglet 130A, tip 140A of upper winglet 130A, lower winglet 130B, tip 140B of lower winglet 130B, blended portion 132 and attachment end 136 of winglet system 112. Upper winglet 130A may have leading edge 146A and lower winglet 130B may have leading edge 146B. Upper winglet 130A and lower winglet 130B may overlap one another along chord 34 (see FIG. 5) of main wing tip 28 to provide overlap region 138 shown in FIG. 11.

Winglet system 112 may provide similar benefits as explained above in relation to winglet system 12. However, in reference to FIG. 13, the configuration of winglet system 112 may allow for a larger junction angle α2. Lower winglet 130B of winglet system 112 may be substantially identical to lower winglet 30B of winglet system 12. At the junction of upper winglet 130A with blended portion 132, there may be a discontinuity in the curvature of upper winglet 130A relative to main wing 24 allowing upper winglet 130A to extend from blended portion 132 at a greater junction angle α2 in order to further reduce the risk of negative interference between lower winglet 130B and upper winglet 130A. The extension of upper winglet 130A from blended portion 132 may be non-tangential to main wing 24 when viewed along chord 34 (see FIG. 5) of main wing tip 28 as shown in FIG. 13. In other words, a spanwise profile of upper winglet 130A extending along leading edge 146A of upper winglet 130A may be tangent-discontinuous with leading edge 29 of main wing 24 when viewed along chord 34 of main wing tip 28.

Upper winglet 130A may have inflection point IP2 illustrated in FIG. 13 along the spanwise profile extending along leading edge 146A of upper winglet 130A. Inflection point IP2 may correspond to a location along leading edge 146A where the curvature of upper winglet 130A changes from being convex to being concave. In some embodiments, at least part of leading edge 146A inboard of inflection point IP2 may be convex relative to space 44 between upper winglet 130A and lower winglet 130B. Conversely, at least part of leading edge 146A outboard of inflection point IP2 may be concave relative to space 44 between upper winglet 130A and lower winglet 130B. Inflection point IP2 may be disposed closer to main wing tip 28 than to tip 140A of upper winglet 130A.

In some embodiments of winglet system 112, junction angle α2 may be between 60 degrees and 90 degrees. In some embodiments of winglet system 112, junction angle α2 may be greater than 45 degrees and up to 150 degrees.

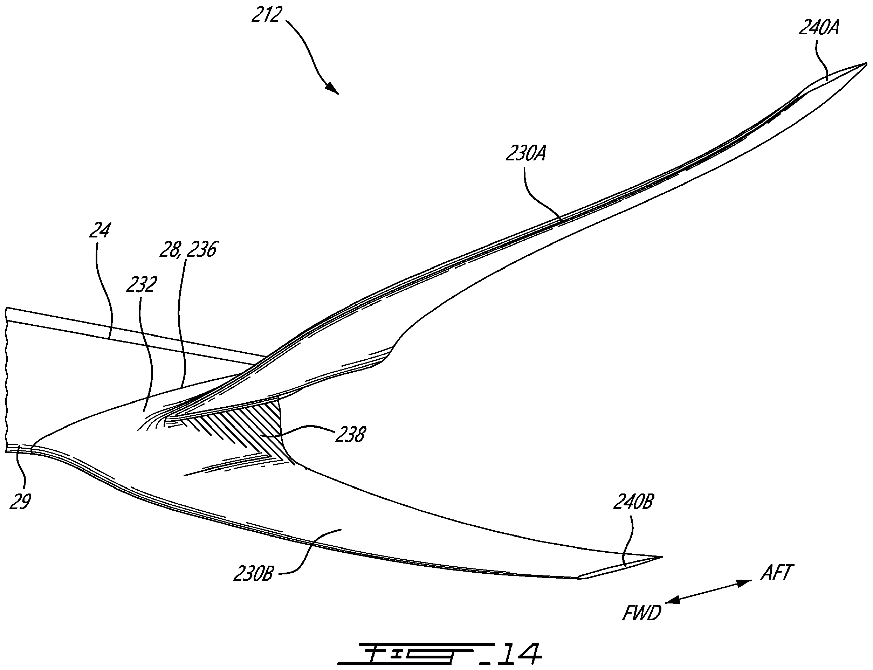

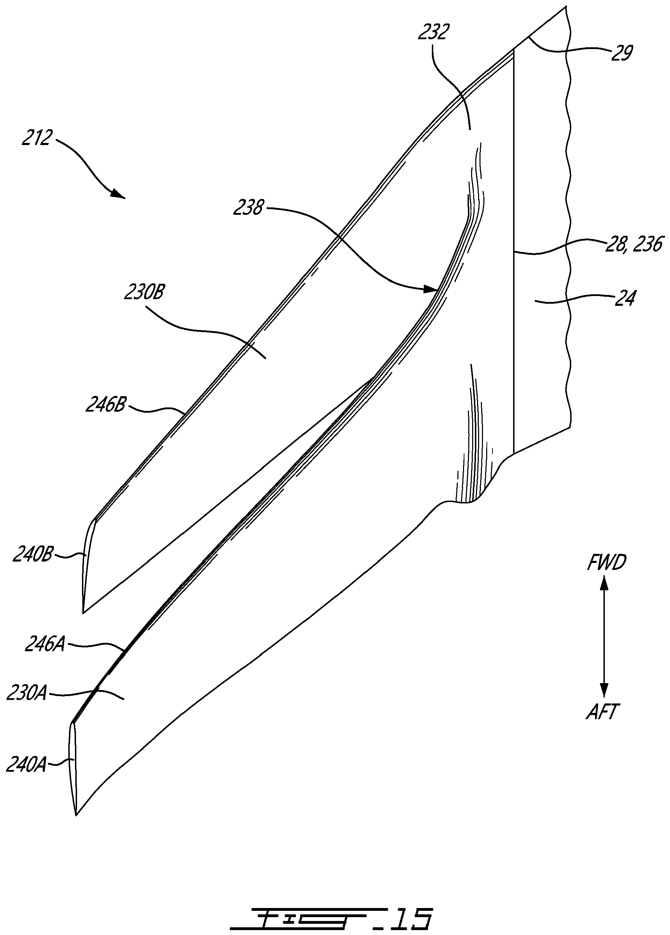

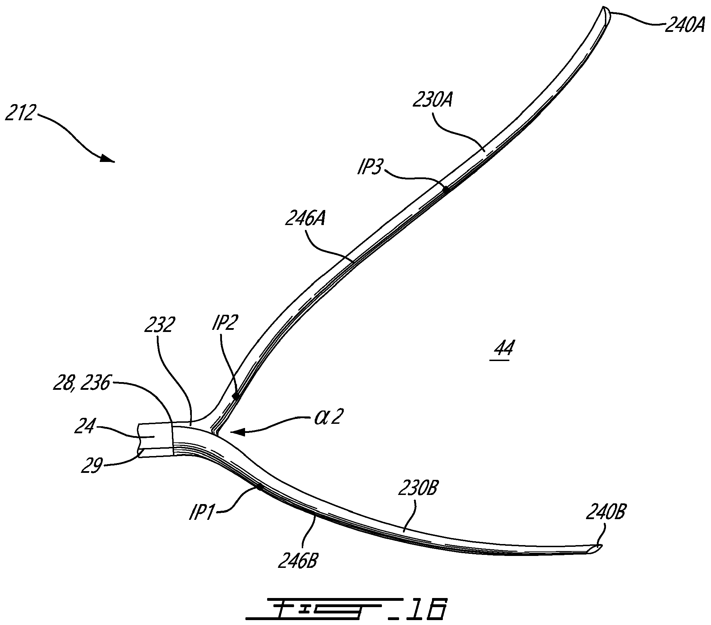

FIGS. 14-16 illustrate another exemplary port side winglet system 212 that may be suitable for aircraft 10. FIG. 14 is an enlarged perspective view of winglet system 212. FIGS. 15 and 16 are top and front views respectively of winglet system 212. The description of elements of winglet system 212 corresponding to elements of winglet system 12 described above is not repeated. Elements of winglet system 212 corresponding to elements of winglet system 12 are identified using reference numerals that have been incremented by 200. Winglet system 212 may include upper winglet 230A, tip 240A of upper winglet 230A, lower winglet 230B, tip 240B of lower winglet 230B, blended portion 232 and attachment end 236 of winglet system 212. Upper winglet 230A may have leading edge 246A and lower winglet 230B may have leading edge 246B. Upper winglet 230A and lower winglet 230B may overlap one another along chord 34 (see FIG. 5) of main wing tip 28 to provide overlap region 238 shown in FIG. 14.

Winglet system 212 may provide similar benefits as explained above in relation to winglet system 12. Similar to winglet system 112, winglet system 212 may also allow for a larger junction angle α2 to be achieved. Lower winglet 230B of winglet system 212 may be substantially identical to lower winglet 30B of winglet system 12. At the junction of upper winglet 230A with blended portion 232, there may be a discontinuity in the curvature of upper winglet 230A relative to main wing 24 allowing upper winglet 230A to extend from blended portion 232 at a greater junction angle α2 in orderto further reduce the risk of negative interference between lower winglet 230B and upper winglet 230A. A spanwise profile of upper winglet 230A extending along leading edge 246A of upper winglet 230A may be tangent-discontinuous with leading edge 29 of main wing 24 when viewed along chord 34 (see FIG. 5) of main wing tip 28.

Upper winglet 230A may have inflection points IP2 and IP3 illustrated in FIG. 16 along leading edge 246A of upper winglet 230A. Inflection points IP2 and IP3 may correspond to locations along leading edge 246A where the curvature of upper winglet 230A changes from being convex to being concave or vice versa. In some embodiments: at least part of leading edge 246A inboard of inflection point IP2 may be convex relative to space 44 between upper winglet 230A and lower winglet 230B; at least part of leading edge 246A between inflection points IP2 and IP3 may be concave relative to space 44; and at least part of leading edge 246A outboard of inflection point IP3 may be convex relative to space 44. Inflection point IP2 may be disposed closer to main wing tip 28 than to tip 240A of upper winglet 230A. Inflection point IP3 may be disposed closer to tip 240A of upper winglet 230A than to main wing tip 28. Inflection point(s) IP2 and/or IP3 may be incorporated in upper winglet 230A to adjust the span of winglet 212 and/or potentially adjust the amount of bending moment induced by winglet 212.

In some embodiments of winglet system 212, junction angle α2 may be between 60 degrees and 90 degrees. In some embodiments of winglet system 112, junction angle α2 may be greater than 45 degrees and up to 150 degrees.

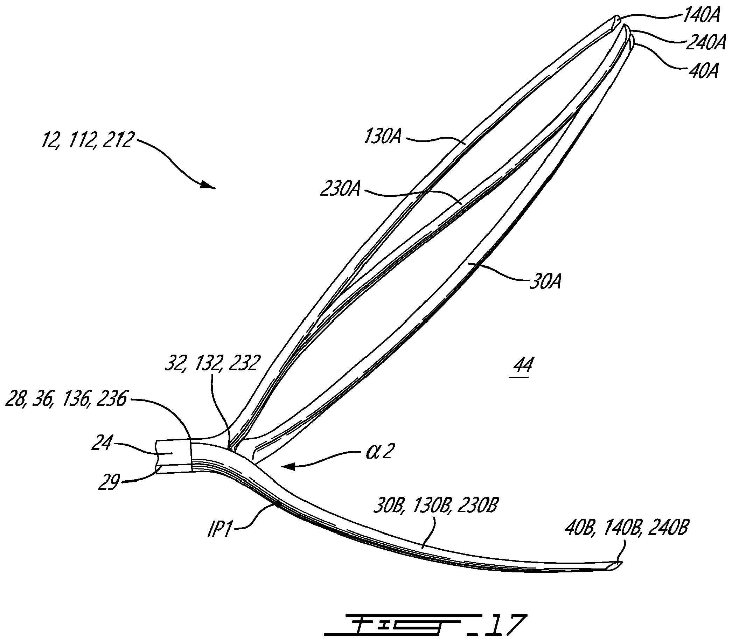

FIG. 17 is a front view along chord 34 (see FIG. 5) of main wing tip 28 of the winglet systems 12, 112 and 212 in a superimposed arrangement. Winglet systems 12, 112 and 212 are illustrated as having an identical lower winglet 30B, 130B, 230B. The configurations of upper winglets 130A and 230A may allow for a greater junction angle α2 than the configuration of upper winglet 30.

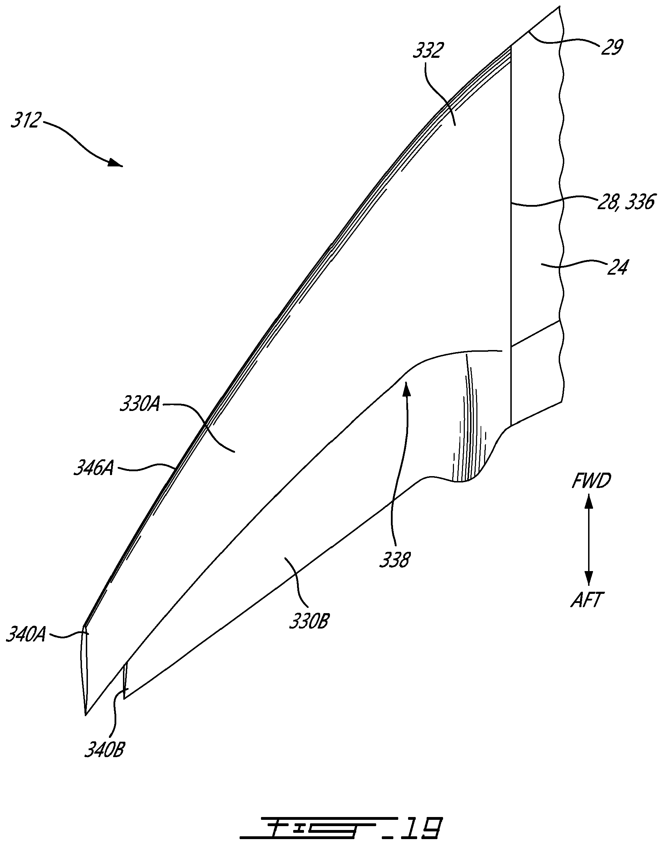

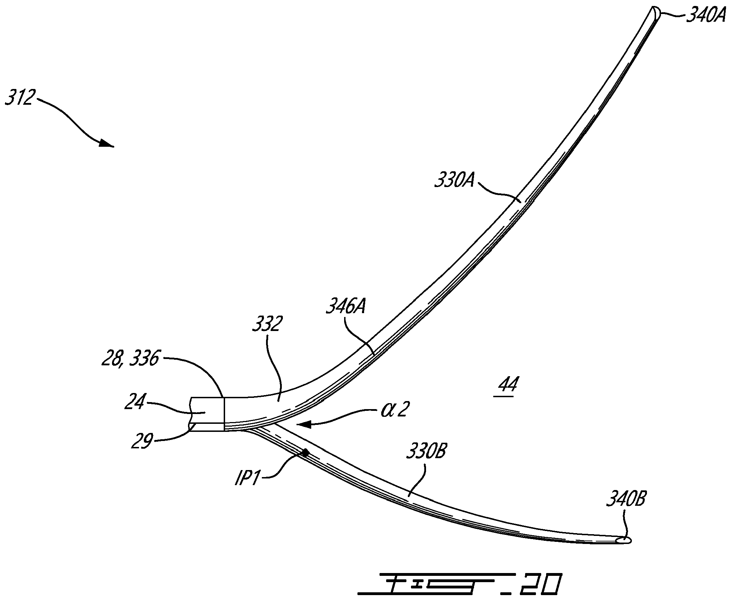

FIGS. 18-20 illustrate another exemplary port side winglet system 312 that may be suitable for aircraft 10. FIG. 18 is an enlarged perspective view of winglet system 312. FIGS. 19 and 20 are top and front views respectively of winglet system 312. The description of elements of winglet system 312 corresponding to elements of winglet system 12 described above is not repeated. Elements of winglet system 312 corresponding to elements of winglet system 12 are identified using reference numerals that have been incremented by 300. Winglet system 312 may include upper winglet 330A, tip 340A of upper winglet 330A, lower winglet 330B, tip 340B of lower winglet 330B, blended portion 332 and attachment end 336 of winglet system 312. Upper winglet 330A may have leading edge 346A and lower winglet 330B may have leading edge 346B.

Upper winglet 330A and lower winglet 330B may overlap one another along chord 34 (see FIG. 5) of main wing tip 28 to provide overlap region 338 shown in FIG. 18. In some embodiments, such overlap region 338 may extend from the junction of upper winglet 330A and lower winglet 330B to tip 340B of lower winglet 230B.

Winglet system 312 may provide similar benefits as explained above in relation to winglet systems 12, 112 and 212. Winglet system 312 shows that lower winglet 330B may be disposed aft of upper winglet 330A relative to chord 34 of main wing tip 28 and that upper winglet 330A may be disposed forward of lower winglet 330B. Accordingly, leading edge 346A of upper winglet 330A may be disposed forward of leading edge 346B of lower winglet 330B relative to chord 34 of main wing tip 28.

FIGS. 18-20 show upper winglet 330A as being similar to upper winglet 30A and lower winglet 330B as being similar to lower winglet 30B. However, it is understood that the positioning of upper winglet 330A and lower winglet 330B illustrated in FIGS. 18-20 may be applied to any winglet systems 12, 112 and 212 described herein.

In reference to FIG. 20, a spanwise profile of upper wing let 330A extending along leading edge 346A of upper winglet 330A may be tangent-continuous with leading edge 29 of main wing 24 when viewed along chord 34 of main wing tip 28.

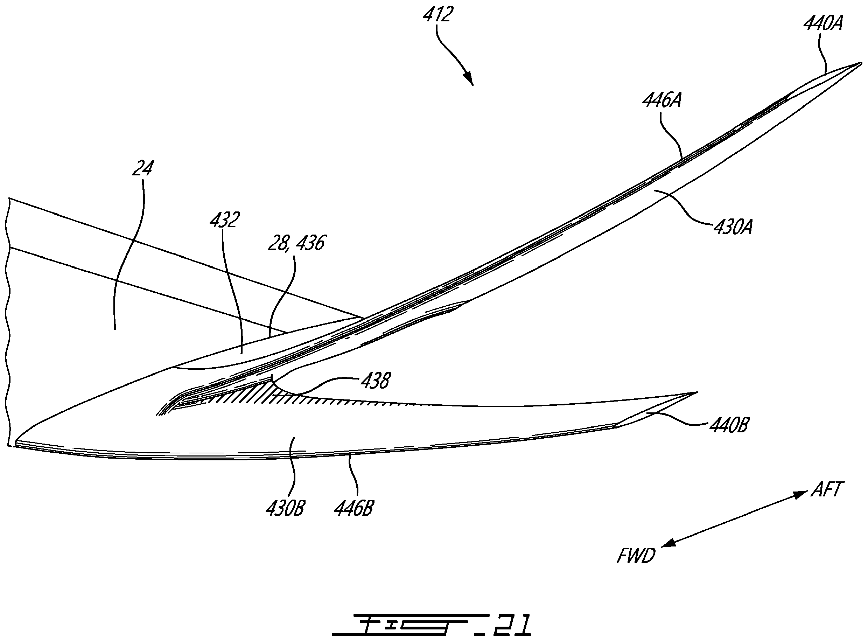

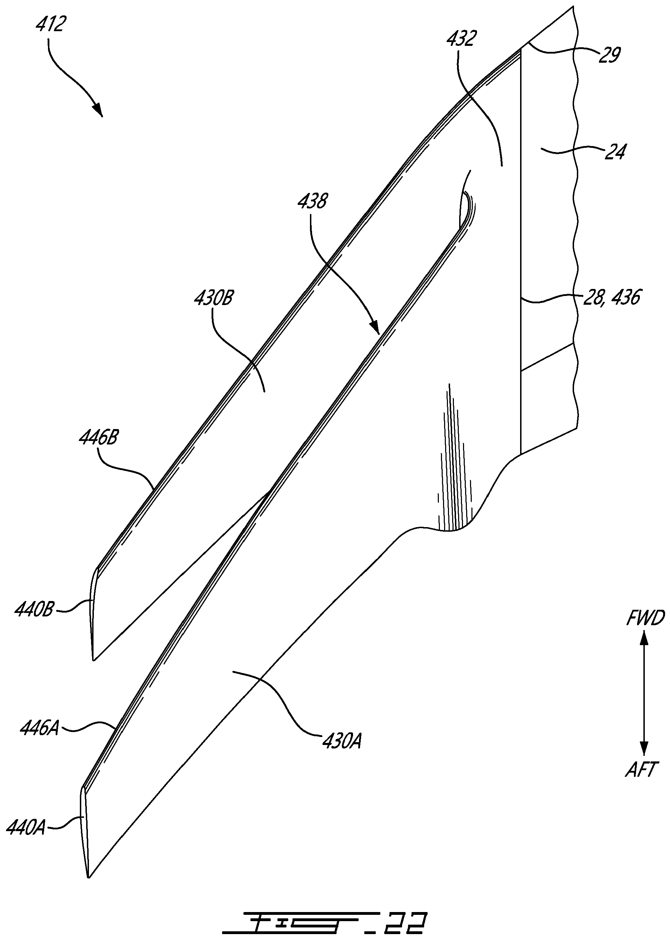

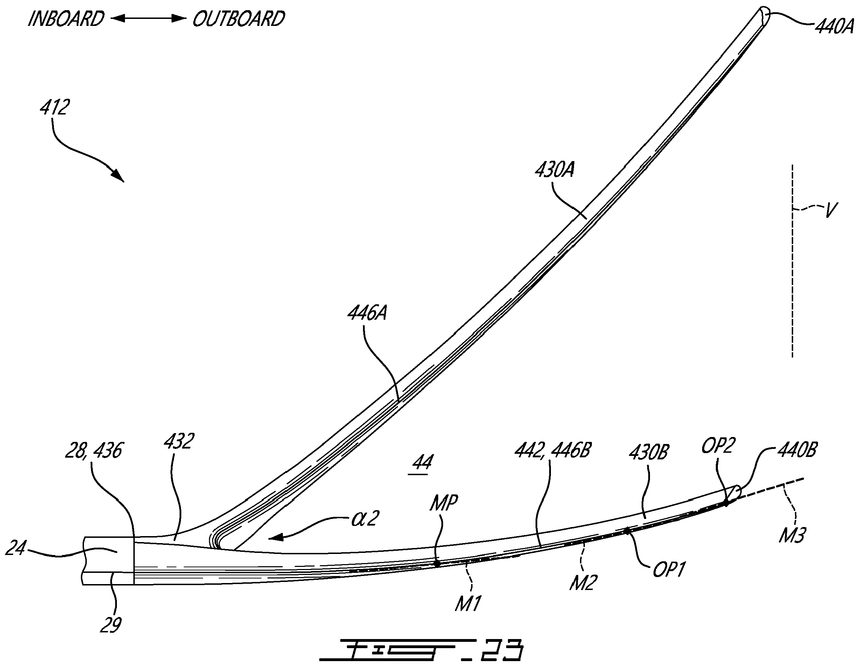

FIGS. 21-23 illustrate another exemplary port side winglet system 412 that may be suitable for aircraft 10. FIG. 21 is an enlarged perspective view of winglet system 412. FIGS. 22 and 23 are top and front views respectively of winglet system 412. The vantage point in FIG. 23 is substantially along a chordwise direction of main wing tip 28 (i.e., along chord 34 shown in FIG. 5). The description of elements of winglet system 412 corresponding to elements of winglet system 12 described above is not repeated. Elements of winglet system 412 corresponding to elements of winglet system 12 are identified using reference numerals that have been incremented by 400. Winglet system 412 may include upper winglet 430A, tip 440A of upper winglet 430A, lower winglet 430B, tip 440B of lower winglet 430B, blended portion 432 and attachment end 436 of winglet system 412. Upper winglet 430A may have leading edge 446A and lower winglet 430B may have leading edge 446B. Tip 440A of upper winglet 430A may be disposed higher than tip 440B of lower winglet 430B.

Upper winglet 430A and lower winglet 430B may overlap one another along chord 34 (see FIG. 5) of main wing tip 28 to provide overlap region 438 shown in FIG. 21. In some embodiments, such overlap region 438 may extend from the junction of upper winglet 430A and lower winglet 430B toward tip 440B of lower winglet 430B.

Winglet system 412 may provide similar benefits as explained above in relation to winglet systems 12, 112, 212 and 312. Upper winglet 430A and lower winglet 430B may be staggered along chord 34 of main wing tip 28. Winglet system 412 shows that lower winglet 430B may be disposed forward of upper winglet 430A relative to chord 34 of main wing tip 28 and that upper winglet 430A may be disposed aft of lower winglet 430B. Accordingly, leading edge 446B of lower winglet 430B may be disposed forward of leading edge 446A of upper winglet 430A relative to chord 34 of main wing tip 28. Alternatively, lower winglet 430B may be disposed aft of upper winglet 430A relative to chord 34 of main wing tip 28, and upper winglet 430A may be disposed forward of lower winglet 430B.

In reference to FIG. 23, spanwise profile 442 of lower winglet 430B extending along leading edge 446B of lower winglet 430A may be tangent-continuous with leading edge 29 of main wing 24 when viewed along chord 34 of main wing tip 28.

Both upper winglet 430A and lower winglet 430B may extend upwardly relative to main wing tip 28 and to leading edge 29 of main wing 24. Tip 440B of lower winglet 430B may be disposed higher from ground G (shown in FIG. 3) and thereby provide a greater ground clearance CL. In some embodiments, at least a majority of leading edge 446B of lower winglet 430B may be concave relative to space 44 between upper winglet 430A and lower winglet 430B when viewed from the vantage point of FIG. 23.

In relation to longitudinal axis LA of fuselage 16 (shown in FIG. 1) and in relation to main wing tip 28, tip 440A of upper winglet 430A may be disposed laterally outboard or inboard of tip 440B of lower winglet 430B. In some embodiments, tip 440B of lower winglet 430B may be substantially vertically aligned with tip 440A of upper winglet 430A.

Referring to FIG. 23, spanwise profile 442 may have midpoint MP disposed at or near a middle of spanwise profile 442. Midpoint MP may be disposed halfway along spanwise profile 442 between attachment end 436 and tip 440B of lower winglet 430B. For example, midpoint MP may be disposed between inboard and outboard portions of spanwise profile 442 of substantially equal curve lengths. Spanwise profile 442 may have slope M1 at midpoint MP. In various embodiments, slope M1 may be negative (i.e., downwardly inclined), zero, or positive (i.e., upwardly inclined) relative to vertical axis V.

Spanwise profile 442 may have slope M2 at outboard point OP1 disposed outboard of midpoint MP. Slope M2 at outboard point OP1 may be greater than slope M1 at midpoint MP. In other words, slope M2 may be inclined more upwardly than slope M1. In various embodiments, slope M2 may be negative (i.e., downwardly inclined), zero, or positive (i.e., upwardly inclined) relative to vertical axis V. Outboard point OP1 may be disposed closer to tip 440B of lower winglet 430B than to midpoint MP along spanwise profile 442.

Spanwise profile 442 may have slope M3 at outboard point OP2 disposed outboard of midpoint MP. Slope M3 at outboard point OP2 may be greater than slope M1 at midpoint MP. Slope M3 at outboard point OP2 may also be greater than slope M2 at outboard point OP1. In other words, slope M3 may be inclined more upwardly than slopes M1 and M2. In various embodiments, slope M3 may be negative (i.e., downwardly inclined), zero, or positive (i.e., upwardly inclined) relative to vertical axis V. Outboard point OP2 may be disposed substantially at tip 440B of lower winglet 430B. Outboard point OP2 may be disposed at an outboard end of spanwise profile 442. The more upward orientation of the outboard portion (e.g., including tip 440B) of lower winglet 430B relative to a middle portion or an inboard portion of lower winglet 430B may promote a greater ground clearance.

The above description is meant to be exemplary only, and one skilled in the relevant arts will recognize that changes may be made to the embodiments described without departing from the scope of the invention disclosed. The present disclosure may be embodied in other specific forms without departing from the subject matter of the claims. The present disclosure is intended to cover and embrace all suitable changes in technology. Modifications which fall within the scope of the present invention will be apparent to those skilled in the art, in light of a review of this disclosure, and such modifications are intended to fall within the appended claims. Also, the scope of the claims should not be limited by the preferred embodiments set forth in the examples, but should be given the broadest interpretation consistent with the description as a whole

## Claims

1. A winglet system (12) for a wing (14) of an aircraft (10), the winglet system (12) comprising:
an attachment end (36) for attachment to a main wing (24) of the aircraft (10), the attachment end (36) defining an airfoil section having a chord (34);
an upper winglet (30A); and
a lower winglet (30B), wherein, when the attachment end (36) is attached to the main wing (24) of the aircraft (10):
the upper winglet (30A) has an upper winglet tip outboard of the attachment end (36);
the lower winglet (30B) has a lower winglet tip outboard of the attachment end (36);
the upper wing let tip of the upperwinglet (30A) is disposed higherthan the lowerwinglet tip of the lower winglet (30B) relative to the attachment end (36);
the upper (30A) and lower (30B) winglets are staggered along the chord (34) of the attachment end (36);
the upper (30A) and lower (30B) winglets overlap one another along the chord (34) of the attachment end (36); and
a spanwise profile of the lower winglet (30B) extending along a leading edge (46B) of the lower winglet (30B) has a midpoint, a slope of the spanwise profile at all points outboard of the midpoint closer to the lower winglet tip than to the midpoint being inclined more upwardly than a slope of the spanwise profile at the midpoint.

2. The winglet system (12) as defined in claim 1, wherein the upper (30A) and lower (30B) winglets both extend upwardly relative to the attachment end (36).

3. The winglet system (12) as defined in claim 1, wherein the upper winglet (30A) extends upwardly relative to the attachment end (36) and the lower winglet (30B) extends downwardly relative to the attachment end (36).

4. An aircraft (10) comprising:
a fuselage (16);
one or more engines (18) for propelling the aircraft (10), the one or more engines (18) mounted to the fuselage (16); and
a first wing (14) and a second wing (14) disposed on opposite sides of the fuselage (16), the first and second wings (14) each including:
a main wing (24) including a main wing tip (28); and
a winglet system (12) attached to the main wing tip (28), the winglet system (12) including:
an upper winglet (30A) having an upper winglet tip outboard of the main wing tip (28); and
a lower winglet (30B) having a lower winglet tip outboard of the main wing tip (28);
wherein:
the upper winglet tip of the upper winglet (30A) is disposed higher than the lower winglet tip of the lower winglet (30B) relative to the main wing tip (28);
the upper (30A) and lower (30B) winglets are staggered along a chord (34) of the main wing tip (28);
the upper (30A) and lower (30B) winglets overlap one another along the chord (34) of the main wing tip (28); and
a spanwise profile of the lower winglet (30B) extending along a leading edge (46B) of the lower winglet (30B) has a midpoint, a slope of the spanwise profile at all points outboard of the midpoint closer to the lower winglet tip than to the midpoint being inclined more upwardly than a slope of the spanwise profile at the midpoint.

5. The aircraft (10) as defined in claim 4, wherein the upper (30A) and lower (30B) winglets both extend upwardly relative to the main wing tip (28).

6. The aircraft (10) as defined in claim 4, wherein the upper winglet (30A) extends upwardly relative to the main wing tip (28) and the lower winglet (30B) extends downwardly relative to the main wing tip (28).

7. The aircraft (10) as defined in claim 4, wherein the aircraft (10) is devoid of any engines (18) for propelling the aircraft (10) mounted to the first and second wings (14).
